(19) Europäisches Patentamt
European Patent Office
Office européen des brevets

(11) Veröffentlichungsnummer: **0 010 708**
**B1**

(12) # EUROPÄISCHE PATENTSCHRIFT

(45) Veröffentlichungstag der Patentschrift: **04.08.82**

(51) Int. Cl.³: **C 08 L 83/04**

(21) Anmeldenummer: **79104074.4**

(22) Anmeldetag: **22.10.79**

(54) **Verfahren zur Herstellung von zu Elastomeren härtbaren Organosiloxanmassen mit vermindertem Druckverformungsrest.**

(30) Priorität: **02.11.78 DE 2847481**

(43) Veröffentlichungstag der Anmeldung: **14.05.80 Patentblatt 80/10**

(45) Bekanntmachung des Hinweises auf die Patenterteilung: **04.08.82 Patentblatt 82/31**

(84) Benannte Vertragsstaaten: **BE DE FR GB NL**

(56) Entgegenhaltungen:
**EP-A-0 000 350**
**DE-A-1 945 474**
**FR-A-2 256 225**
**FR-A-2 256 226**

(73) Patentinhaber: **BAYER AG, Zentralbereich Patente, Marken und Lizenzen, D-5090 Leverkusen 1, Bayerwerk (DE)**

(72) Erfinder: **Michel, Werner, Dr., Am Hahnenweg 1, D-5000 Köln 80 (DE)**
Erfinder: **Kniege, Wilfried, Alte Wipperfürther Strasse 80, D-5060 Bergisch-Gladbach (DE)**
Erfinder: **Steinberger, Helmut, Dr., Dönhoffstrasse 28, D-5090 Leverkusen-1 (DE)**
Erfinder: **Moretto, Hans-Heinrich, Dr., Formesstrasse 13, D-5000 Köln 80 (DE)**

EP 0 010 708 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von zu Elastomeren härtbaren Organosiloxanmassen mit vermindertem Druckverformungsrest

Die Erfindung betrifft ein Verfahren zur Herstellung von zu Elastomeren härtbaren Massen auf Grundlage von Organopolysiloxanen mit vermindertem Druckverformungsrest.

Herkömmliche Organopolysiloxanelastomere können bei der Prüfung nach DIN 53 517 einen Druckverformungsrest von 95% haben, wenn sie einige Zeit Temperaturen von über 150° C ausgesetzt werden. Bei vielen Anwendungen, z. B. als Dichtungen, ist es jedoch erforderlich, daß Organopolysiloxanelastomere lange Zeit Temperaturen bis über 300° C ausgesetzt werden können, ohne daß der Druckverformungsrest allzu stark ansteigt.

Bisher bekannt sind in der Hitze zu Elastomeren härtbare Massen auf Grundlage von Organopolysiloxanmassen mit Metalloxiden, -peroxiden oder -carbonaten als Mittel zur Verminderung des Druckverformungsrestes. Es werden hierzu unter anderem die entsprechenden Verbindungen des Bariums, Cadmiums, Magnesiums, Praseodyms und Strontiums vorgeschlagen. Nach der US-Patentschrift 2 448 530 werden zur Verringerung der bleibenden Verformung dem Silikonkautschuk vor der Vulkanisation Quecksilber, dessen Salze oder Oxide zugesetzt. Die starke Toxizität der Quecksilberpräparate verhindert aber eine allgemeine Anwendung dieses Verfahrens. Nach der US-Patentschrift 2 713 564 können an die Stelle der Quecksilberverbindungen Alkyldithiocarbamate des Natriums, Zinks, Bleis, Tellurs, Selens, Kupfers oder Wismuts treten. Weiterhin wirken nach US-Patentschrift 2 666 041 Zusätze bestimmter Chinone wie zum Beispiel Naphthochinon, alkylierte Chinone, halogenierte Chinone, Kohlenwasserstoffester von Hydrochinon günstig auf die Verringerung der bleibenden Verformung von Silicongummi.

Ein großer Fortschritt war die Einführung von vinylgruppenhaltigen Silanen in die Siliconkautschuktechnologie, die in Verbindung mit Härtungsmitteln auf Basis von Alkylperoxiden oder -perestern sowie der metallkatalysierten Additionsvernetzung von Hydrogensiloxanen an Vinylsiloxane die Herstellung von Vulkanisaten mit geringem Druckverformungsrest gestatten.

Dennoch bleibt auch bei vinylgruppenhaltigen Siliconkautschukmischungen der Druckverformungsrest unbefriedigend hoch, wenn diese mit Acylperoxiden, insbesondere Bis(2,4-Dichlorbenzoyl)-peroxid, vernetzt werden. Eine Erklärung für diese Erscheinung kann nicht gegeben werden. Trotz dieses Nachteiles ist Bis(2,4-Dichlorbenzoyl)peroxid nicht in allen Fällen durch die oben aufgeführten Systeme ersetzbar, da beispielsweise Alkylperoxide bei kontinuierlicher Vulkanisation endloser Stränge, Kabel oder Schläuche ein unbefriedigendes Vernetzungsverhalten zeigen, sofern die Vulkanisation drucklos, in Warmluft oder mit Hilfe infraroter Strahlung durchgeführt wird. Die Additionsvernetzung kann als technisch noch nicht ausgereift angesehen werden.

Die drucklose kontinuierliche Vulkanisation mittels Heißluft oder Infrarotstrahlung hat sich bei der Vulkanisation von Siliconkautschuk gegenüber anderen Verfahren wie dem Salzbad oder Dampfrohr allgemein durchgesetzt. Bei dieser Art der Vulkanisation mußte bisher, bedingt durch die Eigenart des Bis(2,4-Dichlorbenzoyl)peroxids, ein hoher Druckverformungsrest in Kauf genommen werden. Gegenstand der vorliegenden Erfindung ist nun ein Verfahren zur Herstellung von zu Elastomeren härtbaren Massen auf Grundlage von Organopolysiloxanen mit vermindertem Druckverformungsrest, dadurch gekennzeichnet, daß man einer Mischung, bestehend aus

a) Organopolysiloxan-Polymer mit einer Viskosität von 1 000 000 bis 200 000 000 mPas (25° C) der Formeleinheit

$$(R_a)SiO_{\frac{4-a}{2}}$$

wobei R für einen gegebenenfalls halogensubstituierten Kohlenwasserstoffrest steht und a einen Wert zwischen 1,95 und 2,01 annimmt

b) Härtungskatalysatoren

c) Füllstoffen und

d) weiteren an sich bekannte Zusatzstoffen, 0,1 bis etwa 8 Gew.-% — bezogen auf die Gesamtmischung-Polycarbodiimid in Form von Polycarbodiimid-Polysiloxan-Mischpolymeren zusetzt.

Die Reste R in dem Organopolysiloxan-Polymer oder den Mischungen aus solchen Organopolysiloxan-Polymeren und insbesondere in einem Diorganopolysiloxan-Polymer mit einer Viskosität von 1 000 000 bis 200 000 000 mPas bei 25° C sind z. B. ausgewählt aus einwertigen Kohlenwasserstoffresten, halogensubstituierten einwertigen Kohlenwasserstoffresten und Cyanalkylresten. Solche Reste sind z. B. Alkylreste, wie Methyl, Ethyl, Propyl, Cycloalkylreste, wie Cyclohexyl, Cycloheptyl, Alkenylreste wie Vinyl, Allyl, halogensubstituierte Alkylreste, wie Fluorpropyl, Trifluorpropyl und besonders fluorierte Alkylreste der Formel $R^4CH_2CH_2-$, worin $R^4$ ein Perfluoralkylrest ist, einkernige Arylreste, wie Phenyl, Alkarylreste, wie Methylphenyl, Ethylphenyl, Aralkylreste, wie Phenylmethyl, Phenylethyl, Cyanalkylreste, wie Cyanpropyl usw. sowie andere Substituenten, die üblicherweise als

Substituenten bei linearen Diorganopolysiloxanen gefunden werden. Besonders bevorzugt ist die Auswahl der Reste für R aus Alkylresten mit 1 bis 8 Kohlenstoffatomen, Alkenylresten mit 2 bis 8 Kohlenstoffatomen, halogensubstituierten Alkylresten, wie Fluoralkylresten mit 3 bis 8 Kohlenstoffatomen und einkernigen Arylresten.

Beispiele für Härtungsmittel sind Alkyl-, Aryl- oder Acylperoxide einzeln oder in Kombination. Die Härtung der Organopolysiloxanmassen kann aber auch durch Gammastrahlen erfolgen.

Zu den spezifischen Peroxid-Härtungskatalysatoren, die bevorzugt sind, gehören Di-tertiär-butylperoxid, tertiär-Butyltriethylmethylperoxid, tertiär-Butyltriphenylmethylperoxid, tertiär-Butylperbenzoat und Di-tertiär-alkylperoxid, wie Dicumylperoxid. Andere geeignete Peroxid-Katalysatoren, welche das Härten sowohl über gesättigte als auch ungesättigte Kohlenwasserstoffgruppen an der Silikonkette bewirken, sind Arylperoxide, wie Benzoylperoxide, gemischte Alkylarylperoxide, wie tertiär-Butylperbenzoat, Chloralkylperoxide, wie 1,4-Dichlorbenzoylperoxid, 2,4-Dichlorbenzoylperoxid, Monochlorbenzoylperoxid, Benzoylperoxid, Methylethylketonperoxid, usw. einschließen. Im allgemeinen werden 0,1 bis 8 Gew.-% des Peroxids, bezogen auf den Kautschuk, eingesetzt. Vorzugsweise werden 0,5 bis 4 Gew.-% eingesetzt.

Beispiele für verstärkende Füllstoffe sind insbesondere pyrogen in der Gasphase erzeugtes Siliciumdioxid, gefälltes Siliciumdioxid mit einer Oberfläche von mindestens 50 $m^2/g$ und unter Einhaltung der Struktur entwässerte Kieselsäurehydrogele. Beispiele für nicht verstärkende Füllstoffe sind insbesondere Diatomeenerde, Quarzmehl und Kreide. Ferner eignen sich Titandioxide, Eisenoxid, $Al_2O_3$, Silikate usw.

Als weitere Zusätze werden in der Regel Pigmente, Antidioxidantien und Heißluftstabilisierungsmittel auf Basis bekannter Metalloxide verwendet.

Überraschenderweise führt die Verwendung von Polycarbodiimid enthaltenden Polysiloxanen zu einer unerwarteten Problemlösung. Setzt man einer üblichen Siliconkautschukmischung das Polycarbodiimid-Polysiloxan-Copolymer (das Copolymer enthält üblicherweise etwa 3—80 Gew.-%, vorzugsweise 5—70 Gew.-% Polycarbodiimid — bezogen auf die Gesamtmischung) in Mengen von etwa 0,1 bis 12 Gew.-%, bezogen auf Gesamtpolymer, vorzugsweise etwa 0,5 bis 3 Gew.-%, zu, so verringert sich der Druckverformungsrest der Vulkanisate beträchtlich.

Die Polycarbodiimid-Polysiloxan-Polymeren sind dadurch charakterisiert, daß Polysiloxan und Polycarbodiimid als unterscheidbare Phasen, gegebenenfalls mit teilweiser chemischer und/oder physikalischer Bindung aneinander vorliegen. Sie sind mit Polycarbodiimid gefüllte Polysiloxane, die aus den folgenden zwei Phasen zusammengesetzt sind: (i) einer zusammenhängenden Phase einer Organopolysiloxan-Flüssigkeit und (ii) einer nicht zusammenhängenden Phase aus fein verteilten Teilchen eines Carbodiimid-Polymers, das durch Polykondensation eines entsprechenden Monomeren oder Monomerengemisches in Gegenwart der beschriebenen Organosiloxan-Flüssigkeit und eines Carbodiimidisierungskatalysators erhalten wurde.

Diese mit Polycarbodiimid gefüllten Organopolysiloxan-Massen sind an sich bekannt und ihre Herstellung ist in der DE-OS 2 730 743 eingehend beschrieben. Dabei ist es nicht wesentlich, in welcher Form das Polycarbodiimid-Polysiloxan-Polymer in die Mischung eingebracht wird. Zum Beispiel kann dies in der Weise geschehen, daß Polymere untereinander vorvermischt werden, dann mit Füllstoffen und Hilfsmitteln vermischt werden und darauf das Polycarbodiimid-Polysiloxan-Polymer zugemischt wird, oder es wird eine Vormischung eines üblichen Polysiloxanpolymeren mit Füll- und Hilfsstoffen mit dem Polycarbodiimid-Polymer verschnitten oder es wird das Polycarbodiimid-Polymer mit Füllstoffen und Hilfsmitteln vorgemischt und mit einem Polysiloxan verschnitten oder vermischt oder aber es werden Vormischungen aus beiden Arten von Polymeren im gewünschten Verhältnis miteinander verschnitten.

Hierbei ist die Mischtemperatur keinen besonderen Einschränkungen unterworfen. Alle bei Siliconkautschuk üblichen Verfahrensweisen können auch hierauf angewandt werden. Ebenso können sämtliche in der Technologie der Siliconkautschuk-Herstellung üblichen Verfahren und Einsatzmittel verwendet werden.

Es können beispielsweise die einzelnen Komponenten, aus denen die Gummimischung besteht, bei jeder Temperatur oberhalb der Einfriertemperatur des Polymeren miteinander vermischt werden, beispielsweise bei RT, wobei während des Mischvorganges eine Erwärmung auf 70 bis 100°C stattfinden kann, oder mittels beheizter Mischaggregate bei Temperaturen bis zu 200°C. Es sind auch Verfahrensweisen üblich, wobei zunächst die Mischung bei Temperaturen unterhalb 100°C hergestellt und dann bei Temperaturen oberhalb 100°C, beispielsweise 150°C einer Nachbehandlung unterzogen wird. Der obengenannte Mischprozeß kann auch unter vermindertem Druck ablaufen, um unerwünschte flüchtige Bestandteile aus der Mischung zu entfernen.

Das Mischen kann auf den in der Gummiindustrie üblichen offenen Zweiwalzenaggregaten erfolgen, die wahlweise gekühlt oder beheizt werden können. Ferner eignen sich Schaufelkneter vom Typ der stempellosen Sigma- oder Z-Kneter mit oder ohne Austragschnecke und Stempelkneter vom Typ Bambury sowie kontinuierlich arbeitende Mischaggregate, z. B. Zwei- und Einschneckenmischer.

Der positive Effekt der Polycarbodiimid-Polymere auf die bleibende Verformung ist bei solchen Siliconkautschukvulkanisaten besonders groß, bei denen der Druckverformungsrest hoch ist. Aber auch bei Kautschukmischungen, die Vulkanisate mit niedrigem Druckverformungsrest ergeben, kann

eine weitere Verbesserung durch den erfindungsgemäßen Zusatz beobachtet werden.

Es folgen Beispiele für die Herstellung von Siliconelastomeren, durch die die vorliegende Erfindung näher erläutert wird. Mischungen der oben erwähnten Art wurden unter den üblichen Bedingungen in einem Mischwerk hergestellt und daraus Probekörper gefertigt.

Die Vulkanisation der Probekörper wurde in einer beheizten Presse durchgeführt. Die Prüfung des Druckverformungsrestes erfolgt gemäß der DIN-Vorschrift 53 517. Die Zusammensetzung der Proben wird in Gew.-Teilen angegeben.

## Beispiel 1

Dieses Beispiel erläutert eine Herstellmethode für das Polycarbodiimid-Polysiloxan-Mischpolymer, das in Kautschukmischungen eingesetzt wird.

Es werden hierzu 20 kg eines hydroxylgruppenendgestoppten Polydimethylsiloxans mit einer Viskosität von 18 000 mPas mit einer Rührscheibe mit 500 bis 800 U/min gerührt und auf 70° C erwärmt. Man gibt 30 g eines 1-Methylphospholinoxid-Isomerengemisches hinzu und dosiert zu dieser Mischung unter ständigem Rühren innerhalb von 2 Stunden in einem gleichmäßigen Strom 20 kg eines Isomerengemisches aus 80 Gew.-% Toluylen-2,4-diisocyanat und 20 Gew.-% Toluylen-2,6-diisocyanat zu. Das entstehende Kohlendioxid wird abgeführt. Nach beendeter Isocyanatzugabe wird bei gleichbleibender Temperatur während einer Stunde nachgerührt und das Produkt anschließend auf Raumtemperatur abgekühlt.

Das Produkt ist eine weiße bis schwach gelbliche, viskose Masse mit einer Viskosität von etwa 300 000 mPas.

## Beispiel 2

Dieses Beispiel beschreibt die Darstellung eines Polycarbodiimid-Polysiloxan-Mischpolymers auf Basis von Diphenylmethan-4,4'-diisocyanat.

1500 g Polydimethylsiloxan mit endständigen Hydroxylgruppen und einer Viskosität von 18 000 mPas werden auf 80° C erwärmt und 1,5 g 1-Methylphospholinoxid-Isomerengemisch zugegeben. Innerhalb von 2 Stunden werden bei 80° C unter stetigem Rühren mit einem Ankerrührer 1500 g Diphenylmethan-4,4'-diisocyanat, das auf 40° C erwärmt wurde, zudosiert und nach beendeter Zugabe 1 Stunde bei 80° C nachgerührt. Man erhält eine weiße, fließfähige Masse mit einer Viskosität von 330 000 mPas.

## Beispiele 3 bis 6

Es wird auf einem Gummimischwerk eine Siliconkautschukvormischung hergestellt, indem man in der üblichen Weise zu 100 Teilen eines vinylgruppenhaltigen Polydimethylsiloxanes (0,175 Mol-% Methylvinylsiloxygruppen; $4,5 \cdot 10^6$ mPas) 27,5 Teile einer pyrogen erzeugten Kieselsäure mit einer Oberfläche von mindestens 300 $m^2/g$ und 6,33 Teile eines Verarbeitungshilfsmittels auf Silanolbasis miteinander vermischt.

Diese Vormischung wird in 4 gleiche Teile geteilt und jeweils mit Polycarbodiimid-Polysiloxan-Copolymer nach Beispiel 1, Diatomeenerde und Dicumylperoxid gemäß nachstehender Tabelle 1 auf dem Gummimischwerk vermischt.

Aus diesen vier Mischungen wurden in einer beheizbaren Presse bei 170° C Platten von 2 und 6 mm Stärke vulkanisiert. Die Dauer der Vulkanisation beträgt 10 Minuten. Aus diesen Platten werden die Prüfkörper gemäß der DIN-Vorschrift 53 517 ausgeschnitten.

Ein Teil der Proben wird nach erfolgter Vulkanisation in Heißluft während 6 Stunden bei 200° C gealtert. Im Anschluß daran wird der Druckverformungsrest gemäß der oben erwähnten DIN-Vorschrift geprüft.

Tabelle 1

| | Beispiel 3 | Beispiel 4 | Beispiel 5 | Beispiel 6 |
|---|---|---|---|---|
| Vormischung | 100 | 100 | 100 | 100 |
| Diatomeenerde | 60 | 60 | 60 | 60 |
| Dicumylperoxyd | 0,6 | 0,2 | 0,6 | 0,2 |
| Polycarbodiimid-Siloxan-Copolymer | 2,0 | – | – | 2,0 |
| Druckverformungsrest (%) | | | | |
| 10'/170°C Presse | 12,6 | 15,9 | 15,6 | 12,9 |
| 10'/170°C Presse +6 h/200°C HL | 11 | 10 | 11 | 8 |

Beispiele 7 bis 10

Auf dem Gummimischwerk wird zunächst eine Siliconkautschukvormischung hergestellt, indem in der üblichen Weise 100 Teile eines vinylgruppenhaltigen Polydimethylsiloxans (Methylvinylsiloxygruppen 0,175 Mol-%; $4,5 \cdot 10^6$ mPas), 27,5 Teile einer pyrogen erzeugten Kieselsäure mit mindestens 300 $m^2/g$ Oberfläche nach BET und 6,33 Teile eines Verarbeitungshilfsmittels auf Organosilanolbasis mischt. Diese Vormischung wird in 4 gleiche Teile geteilt und jeweils, entsprechend den Zahlenangaben in der nachstehenden Tabelle 2, mit Polycarbodiimid-Siloxan-Copolymer nach Beispiel 1, Diatomeenerde und einer 50prozentigen Anpastung von Bis(2,4-Dichlorbenzoyl)peroxid in Siliconöl vermischt.

Aus diesen 4 Mischungen werden einerseits in einer beheizbaren Presse bei 120° C Platten von 2 und 6 mm Stärke innerhalb von 10 Minuten Vulkanisationsdauer vulkanisiert und ein Teil der Platten während 6 Stunden bei 200° C einer Heißluftbehandlung unterzogen, andererseits wird ein Teil der Platten einer 10minütigen Heißluftbehandlung bei 200° C unterzogen. Im Anschluß an die Vulkanisation wird der Druckverformungsrest gemäß DIN-Vorschrift 53 517 bestimmt.

Tabelle 2

| | Beispiel 7 | Beispiel 8 | Beispiel 9 | Beispiel 10 |
|---|---|---|---|---|
| Vormischung | 100 | 100 | 100 | 100 |
| Diatomeenerde | 60 | 60 | 60 | 60 |
| Polycarbodiimid-Siloxan-Copolymer | – | 1,0 | 1,5 | 2,0 |
| Bis(2,4-dichlorbenzoyl)peroxid | 1,5 | 1,5 | 1,5 | 1,5 |
| Vulkanisation 10'/120°C Presse Druckverformungsrest (%) | 99,2 | 83,2 | 70,4 | 60,0 |
| Vulkanisation 10'/120°C Presse +6 h/200°C HL Druckverformungsrest (%) | 86,2 | 56,8 | 33,6 | 22,8 |
| Vulkanisation 10'/200°C in Heißluft Druckverformungsrest (%) | 99,0 | 59,0 | 58,1 | 45,3 |

Beispiel 11 und 12

Es wird auf dem Gummimischwerk zunächst eine Siliconkautschukvorrichtung hergestellt, wie sie in den Beispielen 7 bis 10 beschrieben wurde.

Zu 100 Teilen dieser Vormischung werden 60 Teile Diatomeenerde und 1,5 Teile einer 50prozentigen Anpastung von Bis(2,4-Dichlorbenzoyl)peroxid in Siliconöl zugemischt. Die Probe wird geteilt und die eine Hälfte so belassen. Zu 100 Teilen der anderen Hälfte wird 1 Teil Polycarbodiimid-Polysiloxan-Mischpolymer des Beispiels 1 zugesetzt und vermischt.

Aus einem Teil beider Proben werden in einer beheizbaren Presse bei 120° C Platten von 2 und 6 mm Stärke vulkanisiert. Die Vulkanisationsdauer beträgt 10 Minuten. Ein Teil der vulkanisierten Platten wird einer Heißluftbehandlung bei 200° C unterzogen. Die Dauer der Heißluftbehandlung beträgt 6 Stunden.

Aus einem anderen Teil beider Proben werden ebenfalls Platten von 2 und 6 mm Stärke hergestellt und diese innerhalb 10 Minuten bei 200° C durch Heißluft vulkanisiert. Der Druckverformungsrest wird danach gemäß DIN-Vorschrift 53 517 bestimmt.

Tabelle 3

Druckverformungsrest (%) nach Vulkanisation

| | 10'/120°C | 10'/120°C +6 h/200°C HL | 10'/200°C HL |
|---|---|---|---|
| Beispiel 11 | 29,7 | 15,4 | 27,4 |
| Beispiel 12 | 16,5 | 6,0 | 16,4 |

Beispiel 13 und 14

Auf einem Gummimischwerk wird durch Vermischen von 100 Teilen eines vinylgruppenhaltigen Polydimethylsiloxans, 1 Teil Hexamethyldisilazan, 58 Teilen pyrogen erzeugter Kieselsäure mit einer Oberfläche von 200 $m^2/g$ und 12,76 Teilen eines Verarbeitungshilfsmittels auf Organosilanolbasis eine Siliconkautschukvormischung hergestellt. Die Vormischung wird geteilt und die erste Hälfte (Beispiel 13) mit 1,4 Teilen Bis(2,4-Dichlorbenzoyl)peroxid, die zweite Hälfte (Beispiel 14) mit 1,4 Teilen Bis(2,4-dichlorbenzoyl)peroxid und 6 Teilen Polycarbodiimid-Polysiloxan-Mischpolymer nach Beispiel 2 vermischt.

Aus beiden Mischungen werden Platten von 2 und 6 mm Stärke hergestellt und diese innerhalb 10 Minuten bei 120° C vulkanisiert. Die nach DIN 53 517 bestimmten Druckverformungsreste sind in Tabelle 4 wiedergegeben.

Tabelle 4

Druckverformungsrest (%) nach Vulkanisation (10'/120°C)

| Beispiel 13 | Beispiel 14 |
|---|---|
| 81,9 | 57,1 |

**Patentanspruch**

Verfahren zur Herstellung von zu Elastomeren härtbaren Massen auf Grundlage von Organopolysiloxanen mit vermindertem Druckverformungsrest, dadurch gekennzeichnet, daß man einer Mischung, bestehend aus

a) Organopolysiloxan-Polymer mit einer Viskosität von 1 000 000 bis 200 000 000 mPas (25° C) der Formeleinheit

$$(R_a)SiO_{\frac{4-a}{2}}$$

wobei R für einen gegebenenfalls halogensubstituierten Kohlenwasserstoffrest steht und a einen Wert zwischen 1,95 und 2,01 annimmt,

b) Härtungskatalysatoren,

c) Füllstoffen und

d) weiteren an sich bekannte Zusatzstoffen, 0,1 bis etwa 8 Gew.-% — bezogen auf die Gesamtmischung — Polycarbodiimid in Form von Polycarbodiimid-Polysiloxan-Mischpolymeren zusetzt.

## Claims

Process for the preparation of compositions based on organopolysiloxanes which can be cured to give elastomers having reduced permanent set, characterised in that 0.1 to about 8% by weight, based on the total mixture, of polycarbodiimide in the form of polycarbodiimide-polysiloxane copolymers is added to a mixture consisting of

a) an organopolysiloxane polymer, with a viscosity of 1 000 000 to 200 000 000 mPas (at 25° C), of the structural unit

$$(R_a)SiO_{\frac{4-a}{2}}$$

in which R represents an optionally halogensubstituted hydrocarbon radical and a has a value between 1.95 and 2.01,

b) curing catalysts,

c) fillers and

d) further additives which are in themselves known.

## Revendication

Procédé de fabrication de masses durcissables en élastomères, à base d'organopolysiloxanes ayant une moindre déformation résiduelle par compression, caractérisé en ce qu'à un mélange consistant en

a) un polymère d'organopolysiloxane ayant une viscosité de 1 000 000 à 200 000 000 mPas (25° C) d'unité de formule

$$(R_a)SiO_{\frac{4-a}{2}}$$

où R représente un radical hydrocarboné éventuellement halosubstitué et a admet une valeur entre 1,95 et 2,01,

b) des catalyseurs de durcissement,

c) des matières de charge et

d) d'autres additifs connus,

on ajoute 0,1 à environ 8% en poids — par rapport au mélange total — de polycarbodiimide sous forme de copolymères polycarbodiimide-polysiloxane.